(19) Europäisches Patentamt / European Patent Office / Office européen des brevets

(11) **EP 2 193 008 B1**

(12) **EUROPEAN PATENT SPECIFICATION**

(45) Date of publication and mention
of the grant of the patent:
**23.05.2012 Bulletin 2012/21**

(21) Application number: **08770715.4**

(22) Date of filing: **11.06.2008**

(51) Int Cl.:
*B24B 37/04* (2012.01)      *B24D 11/00* (2006.01)
*B24D 13/14* (2006.01)

(86) International application number:
**PCT/US2008/066565**

(87) International publication number:
**WO 2009/029322 (05.03.2009 Gazette 2009/10)**

(54) **METHOD FOR PRODUCING DAMPING POLYURETHANE CMP PADS**

VERFAHREN ZUR HERSTELLUNG VON DÄMPFUNGSPOLYURETHAN-CMP-KISSEN

PROCÉDÉ POUR PRODUIRE DES TAMPONS D'AMORTISSEMENT EN POLYURÉTHANE POUR POLISSAGE CHIMICO-MÉCANIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.08.2007 US 895829**

(43) Date of publication of application:
**09.06.2010 Bulletin 2010/23**

(73) Proprietor: **Praxair Technology, Inc.**
**Danbury, CT 06810 (US)**

(72) Inventors:
• **HUANG, David Picheng**
**Westfield, Indiana 46074 (US)**
• **ZHOU, Ming**
**Boxborough, Massachusetts 01719 (US)**
• **MOSER, Timothy Dale**
**Lizton, IN 46149 (US)**

(74) Representative: **Schwan - Schwan - Schorer**
**Bauerstrasse 22**
**80796 München (DE)**

(56) References cited:
**WO-A-2006/123559      US-A- 3 817 882**
**US-A1- 2006 276 109      US-B1- 6 514 301**

**Description**

Background of the Invention

Chemical mechanical planarization, also known as chemical mechanical polishing or CMP, is a technique used to planarize the top surface of an in-process semiconductor wafer or other substrates in preparation of subsequent steps or for selectively removing material according to its position. The technique employs a slurry that can have corrosive and abrasive properties in conjunction with a polishing pad.

WO 2006/123559 A1 discloses a polishing pad provided with a polishing layer composed of a polyurethane resin foam having fine bubbles, and the polyurethane resin foam has a tensile breaking elongation of 25-120%. US 2006/0276109 A1 discloses polishing pads for chemical mechanical planarization (CMP). An outer annulus or an outer ring of the polishing surface of a circular pad may have a higher coefficient of restitution than an inner portion of the pad in order to provide more uniform wafer polishing. The outer annulus may be formed by increasing the amount of curative and/or changing the chemical composition of the polymer formulation compared to the formulation for the inner portion of the pad (for instance, by changing the type of curative, when forming the outer annulus). Coefficient of restitution is estimated by measuring using Bashore Rebound %.

Generally, CMP is a dynamic process involving cyclic motion of both the polishing pad and the workpiece. During the polishing cycle, energy transmitted to the pad. A portion of this energy is dissipated inside the pad as heat, and the remaining portion is stored in the pad and subsequently released as elastic energy during the polishing cycle. The latter is believed to contribute to the phenomenon of dishing of metal features and oxide erosion.

One attempt to describe damping effects quantitatively has used a parameter named Energy Loss Factor (KEL). KEL is defined as the energy per unit volume lost in each deformation cycle. Generally, the higher the value of KEL for a pad, the lower the elastic rebound and the lower the observed dishing.

To increase the KEL value, the pad can be made softer. However, this approach tends to also reduce the stiffness of the pad. The reduced stiffness results in decreased planarization efficiency and increases dishing due to conformation of the pad around the device corner.

Another approach for increasing the KEL value af the pad is to alter its physical composition in such a way that KEL is increased without reducing stiffness. This can be achieved by altering the composition of the hard segments (or phases) and the soft segments (or phases) in the pad and/or the ratio of the hard to soft segments (or phases) in the pad.

Summary of the Invention

To address advances in electronic components, increasingly complex demands are being placed on CMP processing and equipment utilized to planarize semiconductor, optical, magnetic or other types of substrates. A need continues to exist for CMP pads that provide good removal rates, good within wafer (WTW) and within die (WID) uniformities, low dishing and/or erosion, reduced scratching, lower conditioning requirements and prolonged pad life.

It has been found that CMP pads with low rebound tend to absorb relatively high amounts of energy during cyclic deformation, causing less dishing during polishing and yielding better WID uniformity. Stiffness is an important consideration for WID uniformity and prolonged pad life.

The invention relates to producing CMP pad materials that have special properties, in particular a highly damping performance. These properties are obtained by altering the formulation and process for producing the pad. Choices in starting materials and specific combinations of materials, together with processes such as gas frothing have been found to affect the morphology of the polymeric material, resulting in a final product that has unique properties and is particularly advantageous in CMP pads.

The invention is directed to a method for producing a CMP pad as defined in claim 1. Preferred embodiments are defined in the dependent claims.

The method includes frothing a urethane prepolymer to form a froth and curing the froth in the presence of a curative, thereby producing the microcellular polyurethane material, wherein a solid product formed by polymerizing the urethane prepolymer in the presence of the curative has a Bashore rebound that is less than 38%.

It was discovered that systems that are combinations of polyether urethane prepolymers that contain aliphatic isocyanates, such as H12MDI or HDI, and curatives that include aromatic diamines tend to form highly damping polyurethane materials. It was further discovered that adding triol, e.g., to the aromatic diamine, tended to decrease the Bashore rebound of a solid material formed by polymerizing the prepolymer and curative.

The triol is present in the curative. Triol levels are optimized for higher damping performance.

The invention addresses demands placed on CMP pads used in the manufacture of traditional and advanced electronic, optical or magnetic components and has many advantages. The highly damping polymeric material of the invention has high energy dissipation and can absorb irregular bouncing and oscillating energy at the polishing interface to yield better uniformity. CMP pads manufactured from this material provide good WIW and WID uniformities, smooth polishing performance, low dishing and/or erosion. The pads generally have a high degree of stable hardness or stiffness, providing good planarization performance and long pad life.

Testing and comparing material properties is simplified by using solid products, formed by combining a urethane prepolymer with a curative under polymerization conditions, rather than microcellular samples which require additional process steps, e.g., frothing, and/or ingredients, e.g., surfactants.

Advantageously, the material can be prepared using precursors that are commercially available thus simplifying and facilitating the overall fabrication process. Aspects of gas frothing and casting can be carried out using standard techniques and/or equipment. In some systems, frothing time can be decreased without sacrificing foaming characteristics and quality.

Detailed Description of the Preferred Embodiments

The above and other features of the invention including various details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments within the scope of the invention as defined by the appended claims.

In one aspect, the invention relates to a damping polymeric material that is particularly well suited in the manufacture of CMP pads. As used herein, the term "damping" refers to the ability of a material to absorb mechanical energy. Preferably damping is measured by the Bashore rebound method, a simple technique for testing the rebound of a material. The Bashore rebound test is known in the art and is described, for instance, in the American Society for Testing and Materials (ASTM) Standard D-2632. Other methods for measuring rebound also can be used, as known in the art.

The polymeric material is a polyurethane, i.e., a polymer containing repeating urethane units. The polyurethane is produced from a system that includes at least one urethane prepolymer and a curative. The system can include other ingredients, e.g., surfactants, fillers, catalysts, processing aids, additives, antioxidants, stabilizers, lubricants and so forth.

Urethane prepolymers are products formed by reacting polyols, e.g., polyether and/or polyester polyols, and difunctional or polyfunctional isocyanates. As used herein, the term "polyol" includes diols, polyols, polyol-diols, copolymers and mixtures thereof.

Polyether polyols can be made through alkylene oxide polymerization and tend to be high molecular weight polymers, offering a wide range of viscosity and other properties. Common examples of ether-based polyols include polytetramethylene ether glycol (PTMEG), polypropylene ether glycol (PPG), and so forth.

Examples of polyester polyols include polyadipate diols, polycaprolactone, and others. The polyadipate diols can be made by the condensation reaction of adipic acid and aliphatic diols such as ethylene glycol, propylene glycol, 1,4-butanediol, neopentyl glycol, 1,6-hexanediol, diethylene glycol and mixtures thereof.

Polyol mixtures also can be utilized. For instance, polyols such as those described above can be mixed with low molecular weight polyols, e.g., ethylene glycol, 1,2-propylene glycol, .1,3-propylene glycol, 1,2-butanediol, 1,3-butanediol, 2-methyl-1,3-propanediol, 1,4-butanediol, neopentyl glycol, 1,5-pentanediol, 3-methyl-1,5-pentanediol, 1,6-hexanediol, diethylene glycol, dipropylene glycol and mixtures thereof.

The most common isocyanates utilized in preparing urethane prepolymers are methylene diphenyl diisocyanate (MDI) and toluene diisocyanate (TDI), both aromatic. Other aromatic isocyanates include para-phenylene diisocyanate (PPDI), as well as mixtures of aromatic isocycnates.

In specific aspects of the invention, the urethane prepolymers employed include aliphatic isocyanates such as, for instance, hydrogenated MDI (H 12MDI), hexamethylene diisocyanate (HDI), isophorone diisocyanate (IPDI), other aliphatic isocyanates and combinations thereof.

Urethane prepolymers also can include mixtures of aliphatic and aromatic isocyanates.

Urethane prepolymers often are characterized by the weight percent (wt %) of unreacted isocyanate groups (NCO) present in the prepolymer. Wt % NCO can be used to determining mixing ratios of components for producing polyurethane materials.

Urethane prepolymers can be formed using synthetic techniques known in the art. In many cases, suitable urethane prepolymers also are commercially available.

Examples of commercially available polyether urethane prepolymers, include some Adiprene® polyether prepolymers, from Chemtura Corporation, Middletown, Connecticut, some Airthane® prepolymers, from Air Products and Chemicals, Inc., Allentown, Pennsylvania, and others. In many cases, these prepolymers contain low levels of free monomer, e.g., TDI monomer, and are referred to as "low free" or "LF".

Specific examples of polyether urethane prepolymers include, for instance, those designated as Adiprene® LF 750D (a TDI-PTMEG prepolymer, LF, having a NCO of 8.79 wt %), L 325 (TDI/H12MDI-PTMEG prepolymer, having a NCO of 9.11 wt%), LFG 740D (TDI-PPG prepolymer, LF, having a NCO of 8.75 wt %), LW 570 (H 12MDI- polyether prepolymer, having a NCO of 7.74 wt %), LFH 120 (HDI-polyether prepolymer, LF, having a NCO of 12.11 wt %) and Airthane® PHP-80D (TDI-PTMEG prepolymer, LF, having a NCO of 11.1 wt %). Other specific examples of urethane prepolymers that are commercially available include Andur® (Anderson Development Company), Baytec® (Bayer Material Science) and so forth.

Examples of polyester urethane prepolymers include, for instance, a TDI polyester urethane prepolymer designated as Vibrathane® 8570, having a NCO of 6.97 wt %, from Chemtura Corporation, Middletown, Connecticut. Other suitable polyester urethane prepolymers include but are not limited to Versathane® D-6 or D-7 from Air Products and Chemicals.

The curative is a compound or mixture of compounds used to cure or harden the urethane prepolymer. The curative reacts with isocyanate groups, linking together chains of prepolymer to form a polyurethane.

Common curatives typically used in producing polyurethane include 4,4'-methylene-bis(2-chloroaniline) methylene, abbreviated as MBCA and often referred to by the tradename of MOCA®; 4,4'-methylene-bis-(3-chloro-2,6-diethylaniline), abbreviated as MCDEA; dimethylthiotoluenediamine, trimethyleneglycol di-p-aminobenzoate; polytetramethyleneoxide di-p-aminobenzoate; polytetramethyleneoxide mono-p-aminobenzoate; polypropyleneoxide di-p-aminobenzoate; polypropyleneoxide mono-p-aminobenzoate; 1,2-bis(2-aminophenylthio)ethane; 4,4'-methylene-bis-aniline; diethyltoluenediamine; 5-tert-butyl-2,4- and 3-tert-butyl-2,6-toluenediamine; 5-tert-amyl-2,4- and 3-tert-amyl-2,6-toluenediamine and chlorotoluenediamine and others.

In specific aspects of the invention, the curative employed includes an aromatic amine, in particular an aromatic diamine, e.g., bis-(alkylthio) aromatic diamines. Commercial examples of suitable aromatic diamines include Ethacure® 300 (from the Albermarle Corporation, Richmond, Virginia), which is a mixture containing 3,5-bis(methylthio)-2,6-toluenediamine and 3,5-bis(methylthio)-2,4-toluenediamine; and Ethacure® 100 (also from Albermarle Corporation) which is a mixture containing 3,5-diethyltoluene-2,4-diamine and 3,5-diethyltoluene-2,6-diarnine.

In addition to the aromatic diamine component, preferred curatives include one or more other ingredients. For instance, to modify the urethane domain network or polymer structure, polymer cross-linking density is increased by introducing tri-functional agents for damping performance. Preferred examples of trifunctional agents include triols, for instance aliphatic triols such as trimethanolpropane (TMP), alkoxylated aliphatic triols, e.g. ethoxylated TMP, such as TP30, available from Perstorp Corp., polypropylene ether triol having, for instance, a molecular weight of 100-900 and aliphatic amino triols such as Vibracure® A931, available from Chemtura, triethanol amine (TEA), and others. Mixtures of triols also can be employed.

Triol levels can be optimized for damping performance. Relative to the entire weight of the curative, triols or modified triols, e.g., alkoxylated triols, typically are used in an amount within the range of from 0.2 to 15 weight %. Other ratios can be employed.

In specific examples, the preferred curative for use with aliphatic (HDI or H12MDI) polyether urethane prepolymers is a mixture of Ethacure® 300 in combination with 5-10% wt triol, and in particular the combination of Ethacure 300 with 5% TMP.

Relative amounts of urethane prepolymer and curative can be determined, for instance, by taking into account the %NCO of a given urethane prepolymer. The curative can be added to give a combination of amine and hydroxyl groups at about, e.g., 95%, of the available isocyanate groups in the prepolymer on an equivalent basis. In most instances, curative is added at 90 - 105% the theoretical amount.

In other embodiments, triol can be added individually or with ingredients other than the curative.

The Bashore rebound preferably is measured using a solid product obtained by combining a urethane prepolymer and a curative under polymerization conditions, e.g., suitable temperatures and time periods to cure or harden the combination into a solid product. Generally, the solid product is formed without subjecting the prepolymer to a process intended to introduce microscopic sized voids into the material, for example in the absence of frothing, further discussed below.

Preferred prepolymer-curative combinations polymerize to form a solid product that has a rebound less than about 38%, as measured by the Bashore rebound test. Highly damping solid products, e.g., having a rebound lower than 35%, were obtained from systems that include H12MDI or HDI polyether prepolymers and a curative that is a mixture of Ethacure® 300 and 5 weight % TMP.

The solid product can be used to screen candidate systems with respect to other properties such as hardness. In preferred examples, the solid product has a hardness in the range of from about 30D to about 85D, e.g., from 55D to 80D. The Shore D scale, utilizing Durometer testing, is a well known approach for defining hardness of polymeric materials and generally is applied to plastics harder than those measured on the Shore A scale. The Shore D hardness was measured according to ASTM D 2240.

Other properties that can be studied and compared using a solid product formed by combining a urethane prepolymer and a curative under polymerization conditions include processability, i.e., the ability to form froth and mixing, chemical stability of the product vis-i-vis slurries employed in CMP processing, viscosity of the system, release of free monomer, e.g., TDI, during processing, pot life, color, and so forth.

For CMP applications the damping material preferably is microcellular, containing microscopic sized voids which typically are formed by processes targeted at incorporating such voids into the structure of the material. During CMP planarization, the voids or micropores retain slurry for polishing the surface of the workpiece.

Several approaches can be used to impart microstructure to the polyurethane material. Porosity can be formed, for instance, by using filler particles such as hollow polymeric microspheres, filled with fluid (gas or liquid), and so forth. Voids also can be formed by frothing gas into a viscous system, injecting gas into the polyurethane melt, introducing gas in situ through a chemical reaction giving rise to gaseous product, decreasing pressure to cause dissolved gas to form bubbles or by other methods.

In specific examples of the invention, at least a portion of the void volume is formed by frothing with a gas such as nitrogen, dry air, carbon dioxide, rare gases, e.g., helium, argon, xenon, as well as other gases or gas mixtures. Gases that do not cause chemical reactions such as oxidation reactions in the foam are preferred and are referred to herein as "non-reactive" or "inert" gases. Particularly preferred is nitrogen.

Frothing is described, for instance, in U.S. Patent No. 6,514,301 B, issued to Brian Lombardo on February 4, 2003. Preferably, frothing produces microstructures with adjustable pore size and distribution. In one example, the microcellular polyurethane material has pores greater than about 30 μm.

Frothing the prepolymer can be conducted in the presence of one or more surfactant(s), e.g., non-ionic or ionic surfactant(s). Including a surfactant can be particularly beneficial in systems having low viscosity.

A stable froth (foam) is preferred in creating microstructure in polyurethane materials and is believed to result, at least in part, from the adsorption and partition of hydrophobic hydrocarbon chains of surfactant at the air / polymer interface and reaction of its functional group with the polymer.

It is desirable to select a surfactant which, when used with a specific urethane prepolymer, easily produces froth, preferably using simple processing and equipment. Froths that are stable and maintain their integrity when subjected to varying processing conditions, e.g., shear, temperature or pressure variations, typically employed during processing also are preferred. It was also found that surfactant selection could affect not only frothing intensity or froth stability but also pore size, an important parameter for polymeric materials used to manufacture CMP pads.

Examples of suitable surfactants include silicone surfactants such as, for instance, copolymers containing at least one block comprising polydimethylsiloxane and at least one other block comprising polyether, polyester, polyamide, or polycarbonate segments.

In specific embodiments the surfactant is a polysiloxane-polyalkyleneoxide (or polysiloxane-polyalkylene oxide) surfactant. Polysiloxane-polyalkyleneoxide surfactants also are known in the art as a silicone copolyols and can include polymeric, oligomeric, copolymeric and other multiple monomeric siloxane materials.

Polysiloxane-polyalkyleneoxide surfactants can be copolymers that comprise a polysiloxane backbone comprised of siloxane units, and polyalkyleneoxide sidechains. The polysiloxane backbone can be either straight chain, branched chain or cyclic in structure. The polyalkyleneoxide sidechain of copolymers may include polyethyleneoxide, polypropyleneoxide, polybutyleneoxide macromonomers and so forth, or mixtures thereof. Optionally, the side chains may also include polyethylene, polypropylene, polybutylene monomers. The polyalkyleneoxide monomer can be present in an amount greater than about 10%, preferably greater than about 20%, and more preferably greater than about 30% by weight of the copolymer.

Polyethyleneoxide sidechain macromonomers are preferred. Also, preferred are polypropyleneoxide sidechains, and sidechains comprising polyethyleneoxide and polypropylene oxide at a mole ratio of from about 1:2 to about 2:1.

Particularly useful are copolymers having a molecular weight ranging from about 2,000 to about 100,000 g/g-mole, preferably from about 10,000 to about 80,000 g/g-mole, more preferably from about 15,000 to about 75,000, even more preferably from about 20,000 to about 50,000, and most preferably from about 25,000 to about 40,000.

The polysiloxane-polyalkyleneoxide copolymers of the present invention can have a surface tension of less than about 40 mN/m, preferably less than about 30 mN/m, and more preferably less than about 25 mN/m. The surface tension is measured by the Wilhelmy plate test method according to ASTM D1331-89 using a 0.1% by weight solution at 25° C.

The copolymers can have a Ross Miles foam height of less than about 60 millimeters (mm), preferably less than about 40 mm, more preferably less than about 20 mm, and most preferably less than about 10 mm. The Ross Miles foam height test is performed according to ASTM C1173-53 using 1% by weight solutions and taking 5 minute readings. Additionally, the copolymers can have a hydrophile-lipophile balance (HLB) greater than or equal to about 4, preferably greater than or equal to about 6, and more preferably greater than or equal to about 8.

Examples of commercially available surfactants that can be used are some available from GE Silicones under the designation of Niax®, for instance L-7500, L-5614, L-1580; from Air Products and Chemicals, e.g., under the designation of DC-193, DC-5604 and DC-5164; and from Dow Coming Corporation, Midland, Michigan, e.g., under the designation DC-309, 5098EU and Q2-5211 (a methyl(propylhydroxide, ethoxylated) bis(trimethylsiloxy)silane).

The surfactant preferably is selected based on parameters such as foaming intensity, stability or cell size obtained during frothing. For many urethane prepolymers that include aromatic isocyanates, a suitable surfactant is Niax® L-1800 (a polydimethylsiloxane polyoxyalkylene block copolymer surfactant) available from GE Silicones. Preferred surfactants for frothing aliphatic isocyanate polyether prepolymers, e.g., H 12MDI-polyether or HDI-polyether, include DC-193 and Q2-5211.

Amounts of surfactant can be determined experimentally, for instance by evaluating frothing characteristics and/or properties of the end product. Typically, surfactant levels are within the range of from about 0.3 to about 5% by weight with respect to the total weight of prepolymer and surfactant. Surfactant amounts also can be expressed as parts per hundred parts of resin (PHR). In many cases, a suitable surfactant amount was around 1.5 PHR. Other amounts can be selected.

The system used for forming the polymeric material optionally can include other ingredients, such as catalysts, fillers, processing aids, e.g., mold release agents, additives, colorants, dyes, antioxidants, stabilizers, lubricants and so forth.

Catalysts, for instance, are compounds that are added, typically in small amounts, to accelerate a chemical reaction without being consumed in the process. Suitable catalysts that can be used to produce polyurethane from prepolymers include amines and in particular tertiary amines, organic acids, organometallic compounds such as dibutyltin dilaurate (DBTDL), stannous octoate and others.

As known in the art, fillers can be added to affect polishing properties of a CMP pad, e.g., material removal rates, to promote porosity or for other reasons. Specific examples of fillers that can be utilized include but are not limited to particulate materials, e.g., fibers, hollow polymeric microspheres, functional fillers, nanoparticles and so forth.

In another aspect, the invention relates to preparing a damping microcellular polyurethane material. In a preferred process, a urethane prepolymer preferably is combined with a surfactant and frothed to produce a froth which in turn is combined with a curative. One or more optional ingredient(s) e.g., catalysts, fillers, processing aids, additives, dyes, antioxidants, stabilizers, lubricants and so forth can be added to or can be present in the prepolymer, curative or surfactant. One or more such ingredients also can be added during frothing or to the resulting foam.

Frothing can be conducted with nitrogen or another suitable gas, using equipment such as commercial casters with pressurized or non-pressurized tanks and distribution system or other mixing systems.

In many instances, typical frothing temperatures can be within the range of from about 50 to about 230° F, e.g., 130 to about 185° F; frothing time can be within the range of from about 12 to about 240 minutes; gas, e.g., nitrogen, flow can be within the range of from about 1 to about 20 standard cubic feet per hour; mixing speed can be within the range of from about 500 to about 5000 rotations per minute (RPM).

The pot can be maintained at ambient conditions or under pressure, e.g., up to about 10 atmospheres.

The froth cast and cured in the presence of the curative to produce the polyurethane material.

Casting can be conducted by pouring the foam into a mold, for instance a mold suitable for producing a desired CMP pad. Mold dimensions and shapes useful in manufacturing CMP pads are known in the art.

Curing or hardening the froth to produce a microcellular polyurethane material can be carried out in an oven, e.g., a box oven, convey oven or another suitable oven, at a suitable curing temperature and for a suitable period of time. Systems such as described above can be cured at a temperature in the range of from about 50 to about 250° F, e.g., 235° F, for a period of time of about 30 minutes. The curing process and its end point can be determined by evaluating the viscosity and hardness of the system.

Curing can be conducted in air or under special atmospheres, e.g., nitrogen, or another suitable gas or gas mixture.

After it is determined that curing is completed, for instance at the point when the system in the mold can no longer be poured, the hardened microcellular product is released from the mold and can be post-cured in an oven at a suitable temperature and for a suitable period of time. For instance the hardened product can be post-cured at a temperature within the range of from about 200 to about 250° F, e.g., 235° F, for several hours, e.g., 8-16.

Following post-curing, the microcellular product also can be conditioned at room temperature for a period of several hours to a day or longer.

The microcellular material described herein preferably has a Bashore rebound within the range of from about 25% to about 50%.

The material can have a density within the range of from about 0.6 to about 1.0 g/cm$^3$, preferably within the range of from about 0.80 to about 0.95.

In some embodiments, the hardness of the microcellular polymeric material is in the range of from about 30 to about 80D.

Cell size, also referred to as "pore" size preferably is uniform throughout the material. Mean pore size can be in the rage of from about 2 microns ($\mu$m) to about 200 $\mu$m. In some specific instances, the mean pore size is greater than about 30 microns ($\mu$m), for example within the range of from about 50 to about 100 $\mu$m and larger, e.g., up to about 120 $\mu$m and higher.

Pore area % can range from about 5% to about 60%.

Without wishing to be held to a particular mechanism or interpretation, it is believed that frothing with a non-reactive gas, e.g., nitrogen or another inert gas, in the presence of surfactant affects pore distribution and size during foaming. During frothing, the surfactant appears to control pore size and distributions by controlling surface tension at the air/liquid interface.

CMP pads manufactured using a system and method such as described above can be used in planarizing or polishing semiconductor, optical, magnetic or other substrates.

EXEMPLIFICATION

*General Prepolymer Casting Procedure*

150-200 grams of each prepolymer were weighed into a pre-weighed pint tin can (~500 ml). The tin can was placed on a hot plate and the contents were heated to 70° C, as monitored by a thermometer, while stirring. The tin can was then placed in a vacuum chamber to remove any dissolved gases for about 3-5 minutes. The temperature of the prepolymer was measured again with the thermometer and was maintained at 60° C. If needed, the prepolymer was heated again on the hot plate. The actual weight of the prepolymer in the tin can was measured accurately on a scale by subtracting the weight of the tin can from the total weight.

Curative was poured into the can of prepolymer on the scale within 30 seconds and a timer was pressed immediately. Unless otherwise indicated, the curative was added at a level to give a combination of amine and hydroxyl groups at about 95% of the available isocyanate groups in the prepolymer on an equivalent basis.

After the desired amount of the curative had been added, the system was hand-mixed gently, using a spatula (1.5" x 6") for about one minute, to minimize air bubble entrapping. The mixture was then poured into button or slab aluminum molds, pre-sprayed with mold release agent, and preheated to 235° F in a box oven. Seven (7) buttons having a diameter 1" and a height of 0.5" were prepared. Elastomeric sheets prepared were about 1/16" or 1/4 inch thick.

Curing was conducted in a box oven at 235° F. The pot life of the mixture was monitored until the mixture in the tin could not be poured. After 10 minutes, the button mold was taken out from the oven and the top portions of the button samples were cut with a utility knife to test the easiness of the cutting and the brittleness or strength of the material at this green curing stage. Both button and slab molds were demolded at about 20-30 minutes to check the demoldability.

The buttons and sheets were then post-cured for about 16 hours at 235° F. They were conditioned at room temperature for at least 1 day before hardness and rebound tests and for at least 7 days before any other physical testing.

*Prepolymer Frothing with Surfactant Choice*

500 g of the chosen prepolymer (melted overnight, if needed, in an oven at 150° F) was poured into a dry quart-sized tin can (de-rimmed). A surfactant was selected and 7.5 g of a chosen surfactant was added into the can. The can was placed on a hot plate for heating and then equipped with a holding chain attached to a stable stand, with a copper tubing inserted into the bottom of the can for nitrogen bubbling and with a mechanical mixer with a 3" propeller. The copper tubing was connected to a polyethylene (PE) tubing from a dry nitrogen tank via a gas flow meter. The mixer was set to about 800 rotations per minute (rpm) for uniform mixing while heating the tin can on the hot plate.

When the temperature in the can reached 150° F (measured by a IR temperature gun), the mixing speed was increased to 1500 rpm (measured by a tachometer) and nitrogen bubbling was turned on at 5 standard cubic feet per hour (SCFH). Timing the nitrogen frothing was started and the liquid level in the can was immediately measured from the top rim by a ruler for frothing volume monitoring. After 60-120 minutes of frothing, the liquid level was measured again for the frothing volume calculation using the known can diameter (typical 30% increase). The frothed prepolymer was manually cast with the chosen curative within 30 minutes and kept in an oven at a temperature of 150° F.

*Frothed Prepolymer Cast with Curative Choice*

About 150 g of the frothed prepolymer at 150° F was poured into a dry pint tin can (de-rimmed). Stopwatch timing was started and the calculated amount of the curative choice, e.g. ET5 (95% E300 + 5% TMP), in a 500 ml brown glass bottle kept in 150° F oven for use was added into the pint can with a disposable plastic pipette in about 40 seconds.

Mixing the mixture in the can with a 1.5 inch-wide metal spatula was immediately started and was continued for one minute, avoiding any air bubble entrapment. The reaction mixture was poured into two molds: 1 inch button mold and 1/16 inch slab mold, both pre-wiped with Stoner M800 mold release agent and pre-heated at 235° F in an oven before casting.

Both filled molds were placed in a box oven at 235° F. The timing was closely monitored and the mixture viscosity in the can was frequently checked with the spatula until it was no longer possible to pour the mixture for the pot life measurement which was typically 6-7 minutes. After 10 minutes, the flat portions of the button samples were cut off with a utility knife to check cutting processability. Both button and slab samples were demolded in about 30 minutes from the mixing point. The demolded samples were placed in 235° F oven for a 16 hour post curing period. The button samples were used to measure hardness (Shore D), rebound (Bashore), density and porosity. For hardness and rebound measurements, the button samples were conditioned at ambient temperature for 1+ day.

*Materials*

The urethane prepolymers employed in the experiments described below were obtained commercially and included: Adiprene® LF 750D (a TDI-PTMEG prepolymer, LF, having a NCO of 8.79 wt %); Airthane® PHP-80D (TDI-PTMEG prepolymer, LF, having a NCO of 11.1 wt%); L 325 (TDI/H 12MDI-PTMEG prepolymer, having a NCO of 9.11 wt%); LFG 740D (TDI-PPG prepolymer, LF, having a NCO of 8.75 wt %); LW 570 (H12MDI-polyether prepolymer, having a NCO of 7.74 wt %); and LFH 120 (HDI-polyether prepolymer, LF, having a NCO of 12.11 wt %). The prepolymers are listed in Table A and are identified by their commercial name, chemical composition, supplier, and % NCO.

Table A

| Prepolymer ID | Commercial Name | Isocyanate | Polyol Backbone | Supplier | % NCO |
|---|---|---|---|---|---|
| A | LF750D | TDI, LF | polyether | Chemtura | 8.79 |
| B | PHP-80D | TDI, LF | polyether | Air Products | 11.1 |
| C | L325 | TDI/H12MDI | polyether | Chemtura | 9.11 |
| D | LFG740D | TDI, LF | PPG | Chemtura | 8.75 |
| E | LW570 | H12MIDI | polyether | Chemtura | 7.74 |
| F | LFH120 | HDI, LF | polyether | Chemtura | 12.11 |
| G | 8570 | TDI | polyester | Chemtura | 6.97 |

*Example 1*

Several curatives were evaluated for each of the polyurethane prepolymers identified as A through G in Table A. The curative tested included a commercially aromatic diamine identified herein as MOCA; Ethacure® 300 (from Albermarle Corporation) identified herein as E300, Ethacure® 100 (from Albermarle Corporation), identified herein as E100; butanediol, abbreviated herein as BDO; and several mixtures of aromatic diamines and triols, abbreviated as EP10, EA 10, ET5, ET10, E1T5 and E1T10, and defined as follows:

$$EP10 = E300 + 10\% \; TP30$$

$$EA10 = E300 + 10\% \; A931$$

$$ET5 = E300 + 5\% \; TMP$$

$$ET10 = E300 + 10\% \; TMP$$

$$E1T5 = E100 + 5\% \; TMP$$

$$E1T10 = E100 + 10\% \; TMP$$

where TMP is trimethanolpropane, TP30 is modified TMP and A931 is an aliphatic amino triol. Percentages are weight percentages. Table I lists systems that were studied, each system corresponding to a combination of a specific urethane prepolymer and a specific curative. Table 1 identifies each system by the letter corresponding to the urethane prepolymer (from Table A), followed by a numeral related to the specific curative employed. For instance, system E5 included the aliphatic isocyanate polyether prepolymer LW570 and the curative ET5; system F3 included the aliphatic isocyanate polyether prepolymer LFH120 and the curative ET5; and G2 included the aromatic isocyanate polyester prepolymer 8570 and the curative E300.

The solid product obtained by combining, under polymerization conditions, the specific prepolymer with the specific curative in each system was evaluated with respect to hardness and Bashore rebound. In some cases, other parameters such as processability and CMP slurry immersion also were studied.

The solid product obtained using system C1, where the prepolymer was L325 and the curative was MOCA is a comparative material formed using L325-MOCA. Microsphere fillers are added when the material is fabricated into a polishing pad.

Sample A2 (LF750D and MOCA) had a Bashore rebound of 42% and was used as a benchmark.

Table 1

| System ID | Prepolymer | Curative | % Theory (%) | Hardness | Bashore Rebound (%) |
|---|---|---|---|---|---|
| A1 | LF750D | MOCA | 95 | 74 | 55 |
| A2 | | E300 | 95 | 74 | 42 |
| A3 | | ET5 | 95 | 73 | 37 |
| A4 | | ET10 | 96 | 74 | 41 |
| A5 | | EP10 | 97 | 73 | 42 |
| | | | | | |
| B1 | PHP-80D | MOCA | 95 | 80 | 66 |
| B2 | | E300 | 99.6 | 81 | 45 |
| B3 | | ET5 | 95 | 81 | 39 |
| B4 | | ET10 | 95 | 80 | 37 |
| B5 | | EA10 | 96 | 80 | 37 |
| | | | | | |
| C1 | L325 | MOCA | 90 | 72 | 58 |
| C2 | | E300 | 96 | 73 | 39 |
| C3 | | ET5 | 100 | 73 | 44 |
| C4 | | ET10 | 95 | 72 | 39 |
| | | | | | |
| D1 | LFG740D | MOCA | | 75 | 43 |
| D2 | | E300 | 95 | 73 | 38 |
| D3 | | ET5 | 95 | 75 | 38 |
| D4 | | EP10 | 95 | 73 | 41 |
| | | | | | |
| E1 | LW570 | MOCA | 95 | 73 | 40 |
| E2 | | E300 | 95 | 70 | 40 |
| E3 | | E300 | 95 | 70 | 38 |
| E4 | | E100 | 95 | 70 | 41 |
| E5 | | ET5 | 95 | 68 | 32 |
| E6 | | ET10 | 95 | 69 | 38 |
| | | | | | |
| F1 | LFH120 | BDO | 98 | 65 | 47 |
| F2 | | E300 | 95 | 70 | 42 |
| F3 | | ET5 | 99 | 67 | 34 |

(continued)

| System ID | Prepolymer | Curative | % Theory (%) | Hardness | Bashore Rebound (%) |
|---|---|---|---|---|---|
| F4 | | ET10 | 95 | 64 | 37 |
| | | | | | |
| G1 | 8570 | MOCA | 95 | 73 | 30 |
| G2 | | E300 | 100 | 70 | 29 |
| G3 | | E300 | 95 | 70 | 33 |
| G4 | | ET5 | 95 | 72 | 31 |
| G5 | | EA10 | 95 | 70 | 31 |

Samples B2, B3 and B4 were found to be brittle at 10 minutes at room temperature. Sample E2 had high viscosity and sample E3 had a longer than usual pot life. Except for sample E6, the remaining samples presented in Table 2 exhibited adequate processability.

Several samples were tested for chemical resistance or stability under CMP slurry, such as acid slurry SS12 from Cabot Microelectronics and Base Slurry Cu C2-039 from Praxair Surface Technology.

Among them, samples A2, A3, B5, C2, E5, G2 and G3 were found to be stable.

System B 1 had high hardness. System E1 had high viscosity and resulted in a damping sample. High viscosity also was present in samples E5 and G4. Samples E3 and G3 were damping. Systems characterized by very low viscosity included F2 and F3.

The data indicated that aliphatic isocyanate polyether prepolymers tended to produce a solid material having a Bashore rebound lower than that of solid materials obtained using aromatic isocyanate polyether prepolymers. Adding triol, in particular at optimal levels, to the aromatic diamine tended to reduce the Bashore rebound when compared to neat aromatic diamine.

A preferred system was the very low viscosity system F3 which resulted in a material having a Bashore rebound of 34%. Also preferred were systems E5 and G2.

*Example* 2

Surfactant screening was performed using systems E5, F3 and G2. The surfactants screened were (Niax®) L-7500, L-5614, L-1580 obtained from GE Silicones; DC-193, DC-5604 and DC-5164 from Air Products and Chemicals; and DC-309, 5098EU and Q2-5211 from Dow Coming Corporation.

Results regarding foaming properties are shown in Table 2.

Table 2

| Surfactant | E5 (LW570 + ET5) | F3 (LFH120+ ET5) | G2 (8570 +E300) |
|---|---|---|---|
| | | | |
| L-7500 | F | | 0 |
| L-5614 | FF | | F |
| L-1580 | F | | FF |
| DC-193 | FFF | FFF | FFF |
| DC-5604 | FF | | FF |
| Doc-5164 | FFF | | F |
| DC-309 | FFF | FF | |
| 5098EU | FF | | |
| Q2-5211 | FFFF | FFF | |

where 0 indicates no foaming, F indicates some foaming and FF indicates partial foaming. FFF and FFFF indicate, respectively, strong foaming and very strong foaming.

As seen in Table 2, in the case of aliphatic isocyanate polyether prepolymers, DC-193 (D) and Q2-5211 (Q) produced strong or very strong foaming.

*Example _ 3*

Systems identified in Table 1 as A2, A3, B5, C2, C4, D2, D3, E5, E4, F2, F3, G2 and G4 were used for further frothing and curing testing.

First, prepolymers in each of the A2, A3, B5, C2, C4, D2, D3, E5, E4, F2, F3, G2 and G4 systems were frothed with nitrogen using the surfactants, surfactant levels and conditions shown in Table 3. Generally nitrogen flow was at 5 standard cubic feet per hour (SCFH). In Table 3, L stands for Niax® surfactant L-1800; D for DC-193 and Q for Q2-5211 and the right hand column lists the approximate volume % increase that was observed in each case.

The froths were then cast and cured in the presence of the curative to produce microcellular polyurethane samples. Properties of the microcellular polyurethane materials are presented in Table 4.

As seen in the left hand column of Tables 3 and 4, many of the combinations of prepolymer and curative identified in Table 2 are further described by surfactant type, level and/or frothing conditions. For instance the sample identified as F3-b was formed by frothing the prepolymer LFH120 with nitrogen, in the presence of DC-193 surfactant, at surfactant level of 1.5 PHR, using 1500 RPM mixing for 120 minutes; and curing the resulting froth in the presence of the curative ET5.

Table 3

| Sample ID | Surfactant Level (PHR) and Surfactant Type | Temp (°F) | Mixing (RPM) | Frothing Time (Min) | Approximate Volume Increase (%) |
|---|---|---|---|---|---|
| A2-a | 0.5 L | 150 | 1300 | 90 - 180 | |
| A2-b | 0.5 L | 150 | 750-1500 | 60 | 25 |
| A2-c | 0.5 L | 150 | 1500 | 90 | 25 |
| A2-d | 1.5 L | 150 | 1500 | 60 | 30 |
| | | | | | |
| A3-a | 0.5 L | 150 | 750-1500 | 60 | 25 |
| A3-b | 0.5 L | 150 | 1500 | 90 | 25 |
| A3-c | 1.5 L | 150 | 1500 | 60 | 30 |
| | | | | | |
| B5 | 1.5 L | 150 | 1500 | 60 | 30 |
| | | | | | |
| C2 | 1.5 L | 150 | 1500 | 60 | 30 |
| | | | | | |
| C4 | 1.5 L | 150 | 1500 | 60 | 30 |
| | | | | | |
| D2 | 1.5 L | 150 | 1500 | 60 | 30 |
| | | | | | |
| D3 | 1.5 L | 150 | 1500 | 60 | 30 |
| | | | | | |
| E5 | 1.5 L | 190-210 | 1500 | 90 | 5 |
| | | | | | |
| E4-a | 1.5 L | 190-210 | 1500 | 90 | 5 |
| E4-b | 1.5 Q | 185 | 1500 | 50 | 35 |

(continued)

| Sample ID | Surfactant Level (PHR) and Surfactant Type | Temp (°F) | Mixing (RPM) | Frothing Time (Min) | Approximate Volume Increase (%) |
|---|---|---|---|---|---|
| E4-c | 1.5 D | 185 | 1500 | 16 | 50 |
| | | | | | |
| F2 | 1.5 L | 130 ->100 | 1500 | 120 | 30 |
| | | | | | |
| F3-a | 1.5 L | 130->100 | 1500 | 120 | 30 |
| F3-b | 1.5 D | 140 | 1500 | 45 | 30 |
| | | | | | |
| G2 | 1.5 D | 185 | 1500 | 60 | 34 |
| | | | | | |
| G4 | 1.5 L | 180 | 1500 | 60 | <5 |

Table 4

| Froth ID | Hardness Shore D | Density (g/cm$^3$) | Mean Pore Size ($\mu$m) | Pore Area % |
|---|---|---|---|---|
| | | | | |
| A2-a | 65 | 0.90 | 30-40 | 15-20 |
| A2-b | 67 | 099 | 62 | 15.2 |
| A2-c | 67 | 0.98 | 66 | 14.2 |
| A2-d | 66 | 0.90 | 71 | 20.3 |
| | | | | |
| A3-a | 67 | 0.99 | 67 | 15.5 |
| A3-b | 67 | 0.98 | | |
| A3-c | 65 | 0.89 | 66 | 20.8 |
| | | | | |
| B5 | 65 | 0.79 | 59 | 27.3 |
| | | | | |
| C2 | 57 | 0.77 | 63 | 27.7 |
| C4 | 56 | 0.75 | | |
| | | | | |
| D2 | 56 | 0.80 | 57 | 28.8 |
| D3 | 56 | 0.80 | | |
| | | | | |
| E4-a | 67 | 1.01 | | |
| E4-b | 57 | 0.74 | | |
| E4-c | 54 | 0.66 | 106.2 | 31.2 |
| | | | | |
| F2 | 57 | 0.85 | >100 | |

(continued)

| Froth ID | Hardness Shore D | Density (g/cm³) | Mean Pore Size (μm) | Pore Area % |
|---|---|---|---|---|
| F3-a | 56 | 0.86 | | |
| F3-b | 61 | 0.96 | 87.2 | 18.4 |
| | | | | |
| G2 | 53 | 0.76 | 74.7 | 34.6 |
| G4 | 72 | 1.21 | | |

While this invention has been particularly shown and described with references to preferred embodiments thereof, it will be understood by those skilled in the art that various changes in form and details may be made therein within the scope of the invention encompassed by the appended claims.

**Claims**

1.  A method for producing a CMP pad, the method comprising:

    a. nothing an aliphatic isocyanate polyether prepolymer with an inert gas, in the presence of a polysiloxme-polymkyleneoxide surfactant, to form a froth; and
    b. polymerizing the froth in the presence of a curative including an aromatic diamine and a triol **characterised in that** based on the total weight of the curative including the aromatic diamine and the triol, the triol is present in the curative in an amount within the range of from 0.2 to 15 weight%.

2.  The method of Claim 1, wherein the triol is an alkoxylated triol.

3.  The method of Claim 1, wherein the aliphatic isocyanate is selected from the group consisting of hydrogenated methylene diphenyl diisocyanate, hexamethylene diisocyanate, isophorone diisocyanate and any combination thereof and wherein a solid product formed by curing the aliphatic isocyanate polyether prepolymer in the presence of a curative that includes the aromatic diamine and the triol has a Bashore rebound that is less than 38%.

4.  The method of claim 1 wherein, with respect to a theoretical amount, the curative is in the range of from 90 to 105%; or the surfactant is present in the system in an amount within the range of from 0.3 to 5 wt % based on the total weight of prepolymer and surfactant.

5.  The method of claim 1, further comprising selecting the aliphatic isocyanate from the group consisting of hydrogenated methylene diphenyl diisocyanate, hexamethylene diisocyanate, isophorone diisocyanate and any combination thereof.

6.  The method of claim 1, further comprising forming a solid product formed by curing the aliphatic isocyanate polyether prepolymer in the presence of the curative, wherein the solid product has a Bashore rebound less than 38%.

7.  The method of claim 1. further comprising adding the triol in an amount sufficient to reduce Bashore rebound.

8.  The method of claim 1, wherein the CMP pad has Shore hardness from 30D to 80D.

9.  The method of claim 1, wherein the CMP pad has a mean pore size in the range of from 2 to 200 μm or a pore area % in the range of from 10 to 50%.

10.  The method of claim 1, wherein the CMP pad comprises a Bashore rebound less than 38% and a Shore hardness less than 80D.

**Patentansprüche**

1. Verfahren zur Herstellung eines CMP Pads, wobei das Verfahren die folgenden Schritte aufweist:

   a. Aufschäumen eines aliphatischen Isocyanat-Polyether-Prepolymers mit einem Inertgas in Anwesenheit eines oberflächenaktiven Polysiloxan-Polyalkylenoxids um einen Schaum zu erzeugen; und
   b. Polymerisierung des Schaums in Anwesenheit eines Vernetzungsmittels, welches ein aromatisches Diamin und ein Triol enthält,

   **dadurch gekennzeichnet, dass**
   basierend auf dem Gesamtgewicht des das aromatische Diamin und das Triol enthaltenden Vernetzungsmittels das Triol in dem Vernetzungsmittel mit einem Anteil von 0,2 bis 15 Gewichts % enthalten ist.

2. Verfahren gemäß Anspruch 1, wobei das Triol ein alkoxyliertes Triol ist.

3. Verfahren gemäß Anspruch 1, wobei das aliphatische Isocyanat ein hydrogenisiertes Methylendiphenyldüsocyanat, ein Hexamethylendüsocyanat, ein Isophorondiisocyanat oder eine Kombination dieser ist, und wobei ein festes Produkt, welches gebildet wird durch das Vernetzen des aliphatischen Isocyanat-Polyether-Prepolymers in Anwesenheit eines Vernetzungsmittels, welches das aromatische Diamin und das Triol enthält, eine Rückprallelastizität nach Bashore von weniger als 38% aufweist.

4. Verfahren gemäß Anspruch 1, wobei, bezogen auf einen theoretischen Wert, das Vernetzungsmittel im Bereich von 90 bis 105% liegt; oder
   das oberflächenaktive Mittel in dem System in einem Umfang von 0,3 bis 5 Gewichts% basierend auf dem Gesamtgewicht des Prepolymers und des oberflächenaktiven Mittels enthalten ist.

5. Verfahren gemäß Anspruch 1, wobei das aliphatische Isocyanat ein hydrogenisiertes Methylendiphenyldüsocyanat, ein Hexamethylendüsocyanat, ein Isophorondüsocyanat oder eine Kombination dieser ist.

6. Verfahren gemäß Anspruch 1, wobei ein festes Produkt gebildet wird durch das Vernetzen des aliphatischen Isocyanat-Polyether-Prepolymers in Anwesenheit eines Vernetzungsmittels, und das feste Produkt eine Rückprallelastizität nach Bashore von weniger als 38% aufweist

7. Verfahren gemäß Anspruch 1, wobei das Triol in einer ausreichenden Menge zugegeben wird, um die Rückprallelastizität nach Bashore zu reduzieren.

8. Verfahren gemäß Anspruch 1, wobei das CMP Pad eine Shorehärte von 30D bis 80D aufweist.

9. Verfahren gemäß Anspruch 1, wobei das CMP Pad eine mittlere Porengröl3e im Bereich von 2 bis 200 $\mu$m und einen prozentualen Porenbereich von 10 bis 50% aufweist.

10. Verfahren gemäß Anspruch 1, wobei das CMP Pad eine Rückprallelastizität nach Bashore von weniger als 38% und eine Shorehärte von weniger als 80D aufweist.

**Revendications**

1. Procédé pour produire un tampon de polissage chimico-mécanique (CMP), procédé comprenant :

   a. le moussage d'un prépolymère de polyéther d'isocyanate aliphatique avec un gaz inerte, en présence d'un agent tensioactif du type polysiloxane-poly(oxyde d'alkylène), pour former une mousse ; et
   b. la polymérisation de la mousse en présence d'un durcisseur comprenant une diamine aromatique et un triol, **caractérisé en ce que**, sur la base du poids total du durcisseur comprenant la diamine aromatique et le triol, le triol est présent dans le durcisseur en une quantité comprise dans l'intervalle de 0,2 à 15 en poids.

2. Procédé suivant la revendication 1, dans lequel le triol est un triol alkoxylé.

3. Procédé suivant la revendication 1, dans lequel l'isocyanate aliphatique est choisi dans le groupe consistant en le méthylènediphényldiisocyanate hydrogéné, l'hexaméthylènediisocyanate, l'isophoronediisocyanate et n'importe laquelle de leurs associations, et

dans lequel un produit solide formé par durcissement du prépolymère de polyéther d'isocyanate aliphatique en présence d'un durcisseur qui comprend la diamine aromatique et le triol a un rebond Bashore qui est inférieur à 38 %.

4. Procédé suivant la revendication 1, dans lequel, par rapport à une quantité théorique, le durcisseur en présent en une quantité comprise dans l'intervalle de 90 à 105 % : ou

l'agent tensioactif est présent dans le système en une quantité comprise dans l'intervalle de 0,3 à 5 % en poids sur la base du poids total du prépolymère et de l'agent tensioactif.

5. Procédé suivant la revendication 1, comprenant en outre le choix de l'isocyanate aliphatique dans le groupe consistant en le méthylènediphényldiisocyanate hydrogéné, l'hexaméthylènediisocyanate, l'isophoronediisocyanate et n'importe laquelle de leurs associations.

6. Procédé suivant la revendication 1, comprenant en outre la formation d'un produit solide formé par durcissement du prépolymère de polyéther d'isocyanate aliphatique en présence du durcisseur, dans lequel le produit solide a un rebond Bashore inférieur à 38 %.

7. Procédé suivant la revendication 1, comprenant en outre l'addition du triol en une quantité suffisante pour réduire le rebond Bashore.

8. Procédé suivant la revendication 1, dans lequel le tampon CMP a une dureté Shore de 30D à 80D.

9. Procédé suivant la revendication 1, dans lequel le tampon CMP a un diamètre moyen des pores compris dans l'intervalle de 2 à 200 μm ou un pourcentage de surface des pores compris dans l'intervalle de 10 à 50 %.

10. Procédé suivant la revendication 1, dans lequel le tampon CMP comprend un rebond Bashore inférieur à 38 % et une dureté Shore inférieure à 80D.

## REFERENCES CITED IN THE DESCRIPTION

**Patent documents cited in the description**

- WO 2006123559 A1
- US 20060276109 A1
- US 6514301 B, Brian Lombardo